Europäisches Patentamt

European Patent Office

Office européen des brevets

(11) Publication number: **0 103 924**
**A1**

# (12) EUROPEAN PATENT APPLICATION

(21) Application number: **83201230.6**

(22) Date of filing: **24.08.83**

(51) Int. Cl.³: **B 60 R 9/08**

(30) Priority: **25.08.82 NL 8203330**

(43) Date of publication of application:
**28.03.84 Bulletin 84/13**

(84) Designated Contracting States:
**AT BE CH DE FR GB IT LI LU NL SE**

(71) Applicant: **Eau Claire (International) Limited**
**Piermont House 33 Pier Road**
**St. Helier Jersey Channel Islands(GB)**

(72) Inventor: **Ten Holter, Henricus Wilhelmus**
**Velsgoed 55**
**NL-4841 EK Prinsenbeek(NL)**

(74) Representative: **Boelsma, Gerben Harm, Ir. et al,**
**Octrooibureau Polak & Charlouis Laan Copes van**
**Cattenburch 80**
**NL-2585 GD Den Haag(NL)**

(54) Auxiliary device in a supporting means adapted for securing a surf-board on the roof of a motor vehicle.

(57) The auxiliary device is an upstanding rod like element (9) secured to a supporting beam (2) of an "Imperial" connected to the vehicle roof (1a). Said element (9) fits in the mast foot bore (11) of the surf-board (6). The board is further fastened by the usual lash straps (7, 8). The rod like element (9) prevents sliding movements of the board.

FIG. 1

Auxiliary device in a supporting means adapted for securing a
surf-board on the roof of a motor vehicle.

The invention relates to an auxiliary device in supporting
means adapted for securing a surf-board on the roof of a motor vehicle.

Such means, generally named "imperial", are known in many
embodiments. They mainly comprise two supporting beams extending in
the supporting position transversely along the top of the vehicle
roof front and  aft  and connected at their ends by means of
supporting clamps to the roof edges. The surf-board is secured to the
supporting beams by means of lash straps with its  top directed
downwardly and thereby having its nose tip pointing slightly downwardly.
When driving with a thus supported surf-board substantial forces may
occur which tend to move the board out of its position. In the first
place a lift force arises which nevertheless the fact that the board
is supported having its nose tip, which extends forwardly a relatively
long distance beyond the roof, pointing downwardly, may be rather
substantial and tends to simply lift the board from the roof. In the
second place the forces acting in the horizontal plane which occur
during braking and accelerating respectively of the vehicle tend to
shift the board forwardly and backwardly respectively. The said lash
straps generally offer a sufficient guarantee against unwanted lifting
during driving and particularly also if said straps have been tightened
somewhat less strongly. However, such straps are less reliable where
it concerns securing the board in the driving direction. If the lash
straps has been insufficiently tightened the danger is very much present
that the board rushes forwardly between the lash straps when the
vehicle is suddenly braked and that the board damages the surroundings.

The invention aims at removing this disadvantage without
impairing the easy loading and unloading of the surf-board.

This purpose is achieved according to the invention by an
auxiliary device constituted by a rod like element upstanding from
the supporting surface of the supporting means, the upper end of said
element corresponding to the extremity of a mast foot, the arrangement
being such that the rod like element fits with a snap-in connection or slidingly respectively in the recessed bore for the mast foot in the board in a manner corresponding to that for the mast foot. When supporting the surf-board on the roof of a vehicle provided with a supporting means according to the invention it is imperative that the upwardly projecting rod like element snaps into the recessed bore for the mast foot. After the provision of the lash straps then the board not only is locked against lifting from the roof but also against unwanted sliding movements relative to the roof.

The measure according to the invention is very simple since only a simple rod like locking element is required which is made to cooperate with a provision which is already present in the board.

It is to be noted that it is already known to lock a surf-board against undesired lifting from the roof of a vehicle by means of a rod like element which extends upwardly from the supporting means in a vertical direction through the so-called "lee-board box". of the surf-board and is provided at its end projecting upwardly beyond the board with a lock. However, the idea there is predominantly to safeguard the surf-board against theft; sliding movements in the driving direction are not countered by such a construction.

The invention is hereunder further illustrated with reference to the drawing of an embodiment given as example.

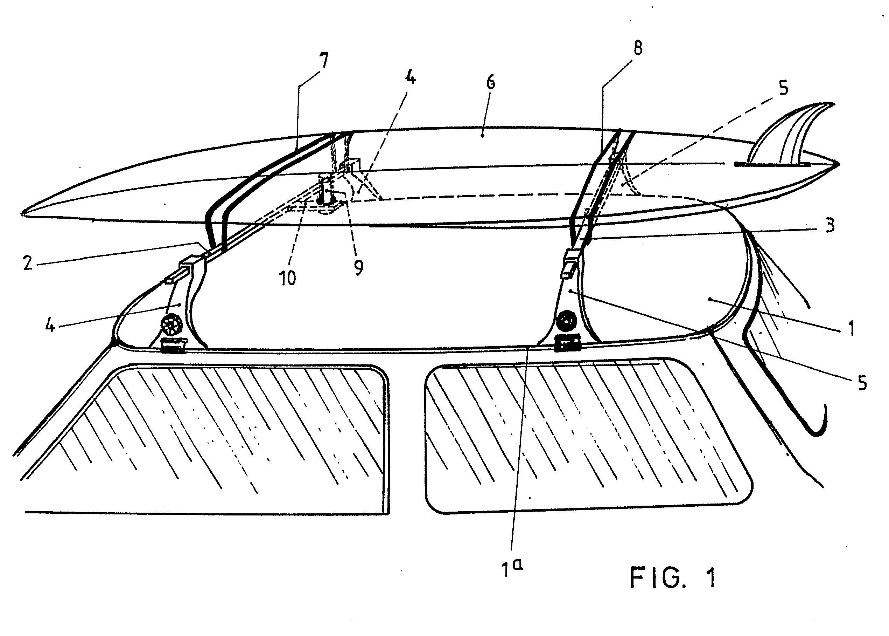

Figure 1 shows a perspective view of a portion of the roof of the vehicle with a supporting means for a surf-board according to the invention provided thereon and

Figure 2 shows a longitudinal section through the rod like locking element and the recessed bore for the mast foot corresponding therewith and provided in the surf-board.

The supporting means as shown comprises two supporting beams 2 and 3 extending transversely front and aft on top of the vehicle roof 1, which beams are clamped at their ends through clamping brackets 4 and 5 to the roof edges 1a constructed as water discharge gutters. Reference number 6 indicates a surf-board which is supported on the supporting beams 2 and 3 with its upper surface facing downwardly and is fixed thereto by means of lash straps 7 and 8.

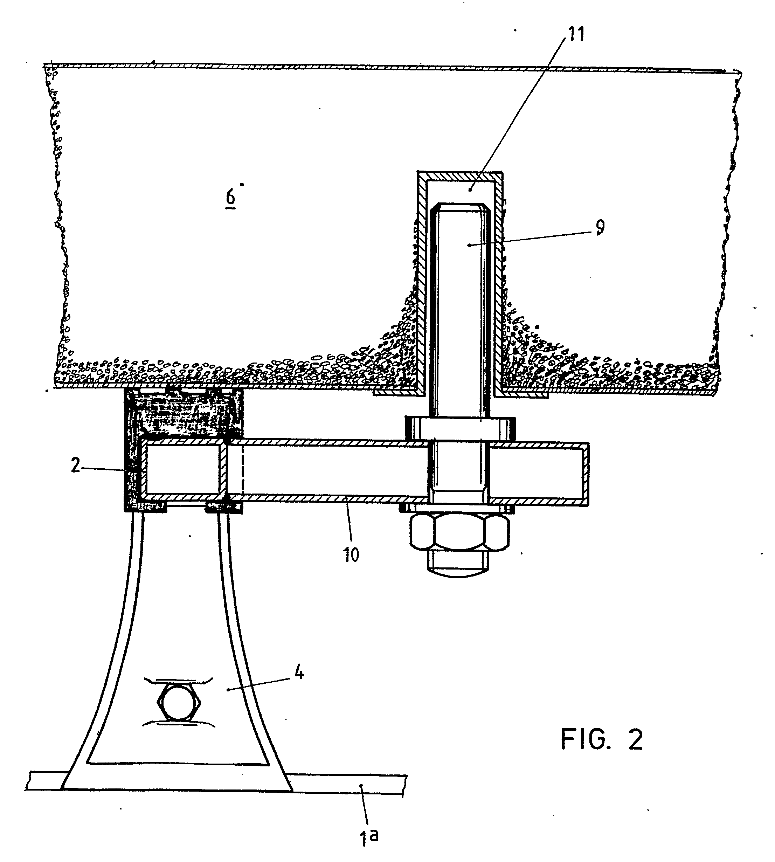

Reference number 9 indicates a rod shaped locking element which is secured through a connecting piece 10 to the front supporting beam 2 and extends along a certain distance in vertical direction from the supporting surface of the supporting means. The free upper extremity of the rod shaped element 9 has a shape corresponding to the mast foot end of the mast belonging to the board 6 and not further shown in the drawing. Thereby the rod shaped element 9 fits with a snap-in connection or slidingly respectively in the bore 11 in the board 6 adapted for inserting the mast foot (see figure 2).

When the surf-board 6 is mounted on the supporting means it is therefore only necessary to take care that the rod shaped locking element 9 snaps or slides respectively with its upper end into the insert-bore 11 of the board. The surf-board is thereby locked against sliding movements along the supporting means. Thereafter the lash straps 7 and 8 may be connected in the usual manner. Unloading the surf-board is as easy as with a supporting means not having the locking element.

Different alternative solutions may be devised within the realm of the invention, particularly with respect to the manner of securing the rod like locking element 9. For longer surf-boards it may be advantageous to use a supporting means consisting of three supporting beams. In that case the rod like locking element will be connected to the intermediate supporting beam. It is also possible to secure the rod like element to a connecting rod between two supporting beams. Finally the rod like locking element could also be connected directly on the vehicle roof 1; e.g. through the intermediary of a connecting piece of the sucking-cup type.

0103924

C L A I M S:

1.	An auxiliary device in a supporting means for a surf-board adapted for connecting it to the roof of a vehicle, characterized by a rod shaped element extending upwardly from the supporting surface of the supporting means, the upper extremity of said element corresponding with the extremity of a mast foot, the arrangement being such that the rod shaped element fits with a snap-in connection or slidingly respectively into the recessed bore in the board in a manner corresponding to that of the mast foot.

2.	Auxiliary device according to claim 1, characterized in that the rod shaped element is secured by means of an intermediary piece to a supporting beam of the supporting means adapted to be secured by clamping it to the roof edges of the vehicle.

FIG. 1

0103924

0103924

FIG. 2

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-3 046 951 (AKUTEC) <br> * Claims 1,5 * | 1,2 | B 60 R 9/08 |
| | --- | | |
| A | DE-A-3 002 941 (TITTEL) | | |
| | ----- | | |

| | |
|---|---|
| | TECHNICAL FIELDS SEARCHED (Int. Cl. ³) |
| | B 60 R 9/08 |

The present search report has been drawn up for all claims

| Place of search | Date of completion of the search | Examiner |
|---|---|---|
| THE HAGUE | 06-12-1983 | SCHMITTER J.M. |